# EUROPÄISCHE PATENTSCHRIFT

(11) **EP 2 143 098 B1**
(45) Veröffentlichungstag und Bekanntmachung des Hinweises auf die Patenterteilung: **04.12.2013**
(21) Anmeldenummer: 08736279.4
(22) Anmeldetag: 16.04.2008
(51) Int. Cl.: G10K 11/168, B60R 13/08

(54) **LEICHTE, SCHALLISOLIERENDE VERKLEIDUNG FÜR EIN KAROSSERIETEIL EINES KRAFTFAHRZEUGES UND VERFAHREN ZU DEREN HERSTELLUNG**
LIGHTWEIGHT, SOUND-INSULATING LINING FOR A BODY PART OF A MOTOR VEHICLE, AND METHOD FOR THE PRODUCTION THEREOF
REVÊTEMENT LÉGER D'ISOLATION ACOUSTIQUE POUR PIÈCE DE CARROSSERIE D'UN VÉHICULE À MOTEUR ET SON PROCÉDÉ DE RÉALISATION

(30) Priorität: 02.05.2007 DE 102007020832
(43) Veröffentlichungstag der Anmeldung: 13.01.2010
(73) Patentinhaber: Carcoustics TechConsult GmbH, 51381 Leverkusen (DE); Bayer Intellectual Property GmbH, 40789 Monheim (DE)
(72) Erfinder: SOLTAU, Dirk, 40223 Düsseldorf (DE); HANSEN, Michael, 50735 Köln (DE); GROSS, Thomas, 42929 Wermelskirchen (DE); ULBRICH, Dagmar, 40789 Monheim (DE)
(74) Vertreter: Cohausz & Florack
(86) Internationale Anmeldenummer: PCT/EP2008/054604
(87) Internationale Veröffentlichungsnummer: WO 2008/135357

(56) Entgegenhaltungen:
- WO-A1-2007/096427
- DE-A1- 19 742 198
- DE-A1-102004 054 646
- DE-B3-102005 056 840
- US-A1- 2005 093 203
- US-A1- 2006 289 231

## Beschreibung

Die Erfindung betrifft eine leichte, schallisolierende Verkleidung für ein Karosserieteil eines Kraftfahrzeuges, insbesondere in Form einer leichten Stirnwandverkleidung, umfassend eine Schallabsorberschicht, eine mit der Schallabsorberschicht direkt verbundene, im wesentlichen luftdichte Schalldämmschicht und eine sich daran anschließende Schaumstoffschicht. Ferner betrifft die Erfindung ein Verfahren zur Herstellung einer solchen Verkleidung.

Herkömmliche Stirnwandverkleidungen für Kraftfahrzeuge sind aus einer schalldämmenden Schwerschicht und einer Schaumstofflage oder textilen Vlieslage aufgebaut, wobei die Schaumstoff- oder Vlieslage als elastische Feder und die Schwerschicht als Masse eines akustischen Feder-Masse-Systems wirken. Als Schwerschicht werden dabei Matten bzw. Formteile aus thermoplastischem Elastomer (TPE) oder EPDM verwendet, die häufig Füllstoff, z.B. Bariumsulfat oder Calciumcarbonat enthalten. Die Schwerschicht hat ein relativ hohes Gewicht. Sie hat oft ein Flächengewicht von 2 bis 4 kg/m², mitunter sogar ein Flächengewicht zwischen 4 und 8 kg/m². Als elastische Feder wird üblicherweise ein PUR-Weichschaumstoff oder eine Vlieslage aus Polyester- oder Baumwollfasern verwendet. Das Flächengewicht solcher Stirnwandverkleidungen liegt also in der Regel im Bereich oberhalb von 3,5 kg/m², was hinsichtlich einer Verringerung des Gesamtfahrzeuggewichts bzw. des Kraftstoffverbrauchs ungünstig ist. Insbesondere wenn zur Verbesserung des Schallabsorptionsvermögens die der Schaumstofflage abgewandte Seite der Schwerschicht mit einer Schallabsorberschicht aus z.B. PET-Vlies kaschiert wird, ergibt sich aufgrund der relativ hohen Anzahl der verschiedenen verwendeten Materialien ein entsprechend zeit- sowie kostenaufwendiger Herstellungsprozess für solche Stirnwandverkleidungen.

Aus der DE 27 35 153 A1 ist ein spezifisch leichtes, als Doppelmatte ausgebildetes Feder-Masse-System bekannt, das aus offenporigem Polyurethan-Weichschaum und einer Deckschicht aus gefülltem Polyurethan-Schwerschaum besteht und insbesondere als Stirnwandverkleidung eines Kraftfahrzeuges ausgebildet ist. Der Polyurethan-Schwerschaum ist dabei als Integralschaum ausgeführt, weist eine Shore-Härte A von 80 bis 90 auf und enthält einen zusätzlichen Füllstoffanteil von 400 bis 500 Gew.-%. Zur Realisierung des genannten Härtegrades der Deckschicht wird eine Polyolmischung aus handelsüblichem Hartschaumpolyol und handelsüblichem Welchschaumpolyol verwendet. Die Deckschicht und die Polyurethan-Weichschaumschicht sind durch Hinterschäumen miteinander verbunden, wobei die Deckschicht in eine Form eingelegt und mit dem Polyurethan-Weichschaum hinterschäumt wird. Auch die Herstellung dieser bekannten Doppelmatte ist relativ zeit- und kostenaufwendig.

Die DE 10 2004 054 646 A1 offenbart eine leichte schallisolierende Verkleidung für ein Karosserieteil eines Kraftfahrzeuges, insbesondere in Form einer Stirnwandverkleidung, sowie ein Verfahren zu deren Herstellung. Die Verkleidung weist eine formgeschäumte Schalldämmschicht aus Polyurethanschaum und eine formgeschäumte schallabsorbierende Schicht aus offenzelligem Polyurethan-Weichschaum auf. Um diese Verkleidung kostengünstig herstellen zu können, wird dort vorgeschlagen, die Schalldämmschicht aus dem gleichen Isocyanat-Material und dem gleichen Polyol-Material herzustellen wie die schallabsorbierende Schicht, jedoch mit unterschiedlichem Mischungsverhältnis von Isocyanat-Material und Polyol-Material, derart, dass die Schalldämmschicht eine höhere Rohdichte aufweist und härter ist als die schallabsorbierende Schicht, wobei die Schalldämmschicht eine im Wesentlichen luftundurchlässige Außenhaut aufweist.

Die DE 10 2005 056 840 B3 beschreibt ein Schallisolationsteil, insbesondere für Kraftfahrzeuge, mit mindestens einer schallabsorbierenden Schicht und mindestens einer damit unmittelbar stoffschlüssig verbundenen Schwerschicht, sowie ein Verfahren zur Herstellung eines solchen Schallisolationsteils. Um das Schallisolationsteil kostengünstig herzustellen und dessen schallabsorbierende Wirkung zu verbessern, wird die Schwerschicht als mikroporöse Sprühhaut ausgebildet, und zwar so, dass sie mindestens einen luftdurchlässigen Teilflächenbereich und mindestens einen luftundurchlässigen Teilflächenbereich aufweist.

Der vorliegenden Erfindung liegt die Aufgabe zugrunde, eine schalldämmende sowie schallabsorbierende Verkleidung, insbesondere eine Stirnwandverkleidung für Kraftfahrzeuge bereitzustellen, die ein geringes Gewicht aufweist und sich relativ kostengünstig realisieren lässt. Zudem soll ein Verfahren zur kostengünstigen Herstellung einer solchen schallisolierenden Verkleidung angegeben werden.

Gelöst wird diese Aufgabe zunächst durch eine Verkleidung mit den Merkmalen des Anspruchs 1.

Die erfindungsgemäße Verkleidung umfasst eine Schallabsorberschicht, eine mit der Schallabsorberschicht direkt verbundene, im Wesentlichen luftdichte Schalldämmschicht und eine sich daran anschließende Schaumstoffschicht. Die Schallabsorberschicht ist aus einem porösen Absorber, vorzugsweise aus einem Faservlies oder Schaumstoff gebildet, der bei einem Prüfdruck von 100 Pa eine Luftdurchlässigkeit im Bereich von 150 bis 2.000 Liter/m²s aufweist. Die Schalldämmschicht ist erfindungsgemäß aus einer integralen, mindestens 0,5 mm dicken Hautschicht der Schaumstoffschicht gebildet, wobei die Schalldämmschicht durch Hinterschäumen des porösen Absorbers im Wesentlichen ohne Schaumdurchschlag mit letzterem stoffschlüssig verbunden ist.

Die Schalldämmschicht und die Schaumstoffschicht werden somit aus den gleichen Ausgangsmaterialien in einem einzeinen Prozessschritt hergestellt und sind in der fertigen Verkleidung integral miteinander verbunden. Vorzugsweise handelt es sich bei der Schaumstoffschicht um eine Polyurethan-Weichschaumschicht mit einer im wesentlichen porenfreien, als Schalldämmschicht dienenden Hautschicht. Durch die Vermeidung einer aus einem anderen Material, beispielsweise Ethylen-Propylen-Dien-Kautschuk (EPDM) hergestellten Schwerschicht sowie den Wegfall des Prozessschrittes des Aufklebens einer Schallabsorberschicht auf die Schwerschicht bzw. Schalldämmschicht lassen sich mit der erfindungsgemäßen Verkleidung eine erhebliche Gewichtsverringerung sowie eine Kosteneinsparung erzielen.

Der poröse Absorber, der vorzugsweise aus Faservlies oder offenporigem Schaumstoff besteht, ist - ohne Aufkleben - mit der Schalldämmschicht (Hautschicht) stoffschlüssig verbunden. Durch seine relativ hohe Luftdurchlässigkeit besitzt der poröse Absorber ein hohes Schallabsorptionsvermögen. Die hohe Luftdurchlässigkeit des porösen Absorbers ist allerdings hinsichtlich der Unterbindung eines Schaumdurchschlages beim Hinterschäumen des Absorbers ungünstig. Die Erfinder haben dieses Problem jedoch durch günstige Verfahrensmaßnahmen gelöst, so dass das Schallabsorptionsvermögen des porösen Absorbers durch die Hinterschäumung kaum beeinträchtigt wird.

Nach einer vorteilhaften Ausgestaltung der erfindungsgemäßen Verkleidung ist vorgesehen, dass die Schalldämmschicht örtlich unterschiedlich dicke Flächenbereiche aufweist, wobei der Dickenunterschied mindestens 1 mm, insbesondere mindestens 2 mm beträgt. Hierdurch lässt sich die Schallisolationswirkung der gewichtsreduzierten Verkleidung unter Berücksichtigung der in der Regel ungleichmäßigen Schallpegelverteilung optimieren.

Hinsichtlich des Verfahrens zur Herstellung der erfindungsgemäßen Verkleidung wird die oben angegebene Aufgabe durch das Verfahren mit den Merkmalen des Anspruchs 11 gelöst.

Das erfindungsgemäße Verfahren ist im Wesentlichen dadurch gekennzeichnet, dass eine poröse, vorzugsweise aus Faservlies oder offenporigen Schaumstoff gebildete Schallabsorberschicht, die bei einem Prüfdruck von 100 Pa eine Luftdurchlässigkeit im Bereich von 150 bis 2.000 Liter/m²s aufweist, mit einer Polyol und Isocyanat enthaltenden Reaktionsmischung in einem Schäumwerkzeug direkt hinterschäumt wird, wobei die Reaktionsmischung im Wesentlichen parallel zur Rückseite der Schallabsorberschicht und/oder parallel zur Bodenfläche einer Kavität des Schäumwerkzeuges in das Schäumwerkzeug eingebracht wird, und wobei ein vorbestimmter Oberflächenteilbereich des Schäumwerkzeuges so temperiert und/oder während des Einbringens das Mischungsverhältnis von Polyol zu Isocyanat so geändert wird, dass sich aus der Reaktionsmischung eine Schaumstoffschicht ergibt, die eine integrale, im wesentlichen luftdichte, mindestens 0,5 mm dicke Hautschicht aufweist, welche im Wesentlichen ohne Schaumdurchschlag mit der Schallabsorberschicht stoffschlüssig verbunden ist. Durch das Einbringen bzw. Weiterfließen der Reaktionsmischung parallel zur Rückseite des porösen Absorbers wird ein Schaumdurchschlag bzw. eine Durchdringung des porösen Absorbers verhindert.

Das erfindungsgemäße Verfahren gestattet die Verwendung standardmäßiger Faservliese, insbesondere Volumenvliese, aus Polyethylenfasern, Polypropylenfasern, einer Mischung aus Polyethylen- und Polypropylenfasern, Baumwollfasern oder einer Mischung aus Polyethylen- und Naturfasern. Das bei der erfindungsgemäßen Verkleidung zum Einsatz kommende Faservlies muss keine besondere Oberflächenbehandlung aufweisen; es muss auch nicht besonders imprägniert sein. Bei dem Faservlies der erfindungsgemäßen Verkleidung kann es sich also um Standardware handeln.

Eine bevorzugte Ausgestaltung des erfindungsgemäßen Verfahrens besteht darin, dass ein begrenztes Volumen der Reaktionsmischung in das Schäumwerkzeug derart eingebracht wird, dass die Reaktionsmischung den porösen Absorber zunächst nicht berührt, wobei sich anschließend die stoffschlüssige Verbindung zwischen der Reaktionsmischung und dem porösen Absorber beim Ausreagieren der Reaktionsmischung ergibt.

Anders ausgedrückt wird die Reaktionsmischung so in das Schäumwerkzeug eingebracht, dass der poröse Absorber beim Ausreagieren (Expandieren) der Reaktionsmischung auf dieser "aufschwimmt". Der poröse Absorber kann dabei an der Unterseite einer oberen Schäumwerkzeughälfte fixiert oder festgelegt sein.

Weitere bevorzugte und vorteilhafte Ausgestaltungen der erfindungsgemäßen Verkleidung und des Verfahrens zu ihrer Herstellung sind in den Unteransprüchen angegeben. Nachfolgend wird die Erfindung anhand einer mehrere Ausführungsbeispiele darstellenden Zeichnung näher erläutert. Es zeigen schematisch:
- Fig. 1: eine Schnittansicht des vorderen Abschnitts eines Kraftfahrzeuges mit einer innenseitig an der den Fahrgastraum vom Motorraum trennenden Stirnwand angeordneten schallisolierenden Verkleidung;
- Fig. 2: eine Schnittansicht eines Abschnitts einer erfindungsgemäßen Verkleidung;
- Fig. 3: eine Schnittansicht eines Abschnitts eines weiteren Ausführungsbeispiels einer erfindungsgemäßen Verkleidung;
- Fig. 4: eine Schnittansicht eines offenen Schäumwerkzeuges zur Herstellung einer erfindungsgemäßen Verkleidung am Ende einer Einspritzphase;
- Fig. 5: eine Schnittansicht des Schäumwerkzeuges der Fig. 4 im geschlossenen Zustand;
- Fig. 6: eine Schnittansicht eines weiteren Schäumwerkzeuges zur Herstellung einer erfindungsgemäßen Verkleidung am Anfang einer Einspritzphase;
- Fig. 7: eine Schnittansicht des Schäumwerkzeuges der Fig. 6 nach Abschluss der Einspritzphase;
- Fig. 8: eine Schnittansicht eines weiteren Schäumwerkzeuges zur Herstellung einer erfindungsgemäßen Verkleidung am Anfang einer Einspritzphase;
- Fig. 9: eine Schnittansicht eines weiteren Schäumwerkzeuges zur Herstellung einer erfindungsgemäßen Verkleidung am Anfang einer Einspritzphase; und
- Fig. 10: eine Schnittansicht eines Abschnitts eines weiteren Schäumwerkzeuges zur Herstellung einer erfindungsgemäßen Verkleidung nach Abschluss der Einspritzphase.

Die erfindungsgemäße schallisolierende Verkleidung ist vorzugsweise als innere Stirnwandverkleidung 1 für ein Kraftfahrzeug 2 ausgebildet. Sie kann jedoch grundsätzlich auch als schallisolierende Verkleidung für andere Karosserieteile eines Kraftfahrzeuges ausgebildet sein, z.B. als Motorhaubenverkleidung oder Dachhimmel.

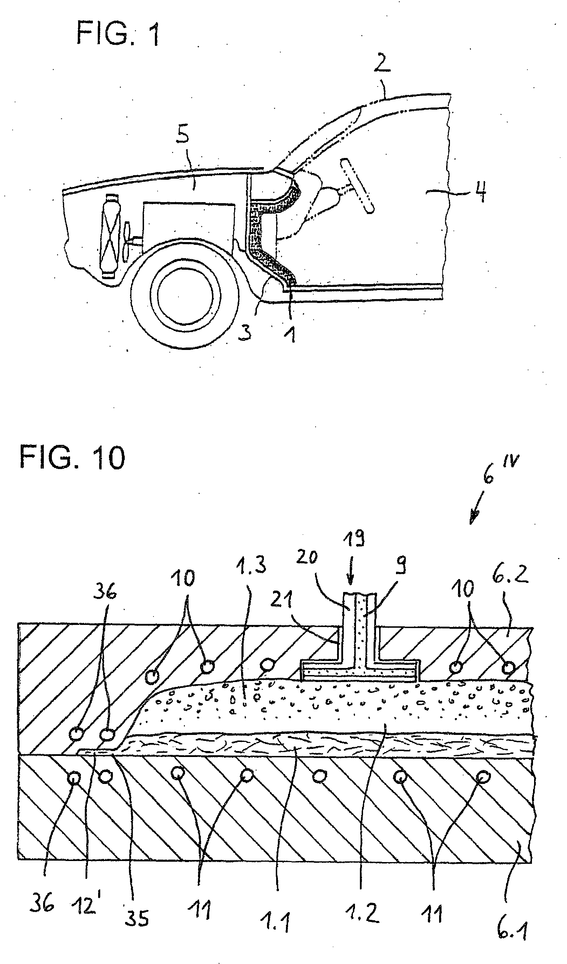

In dem in Fig. 1 dargestellten Ausführungsbeispiel ist die Verkleidung 1 der innenseitigen Kontur einer Stirnwand 3 angepasst, die den Fahrgastraum 4 vom Motorraum 5 abtrennt. Die Verkleidung 1 ist selbsttragend und zeichnet sich durch ein relativ geringes Gewicht aus. Ihr Gesamtflächengewicht beträgt beispielsweise weniger als 2.500 g/m², vorzugsweise weniger als 2.000 g/m². Sie weist eine Schallabsorberschicht 1.1, eine im Wesentlichen luftdichte Schalldämmschicht 1.2 und eine sich daran anschließende Schaumstoffschicht 1.3 auf. Die Schallabsorberschicht 1.1 ist aus einem Faservlies gebildet. Die Schalldämmschicht 1.2 besteht dagegen aus einer integralen, mindestens 0,5 mm dicken Hautschicht einer PUR-Weichschaumstoffschicht. Die Schalldämmschicht (Hautschicht) 1.2 ist mit dem Faservlies 1.1 stoffschlüssig verbunden. Das Faservlies 1.1 wird hierzu mit einer Polyol und Isocyanat enthaltenden Reaktionsmischung hinterschäumt, und zwar vorzugsweise in einem Schuss ("one-shot-process"), d.h. in einem einstufigen Arbeitsgang.

Die Hinterschäumung des Faservlieses 1.1 wird so durchgeführt, dass ein Schaumdurchschlag durch das Faservlies unterbunden wird. Die schallabsorbierenden Eigenschaften des Faservlieses 1.1 bleiben somit im wesentlichen unverändert. Hierzu wird beispielsweise die Einspritzfließrichtung E der Reaktionsmischung parallel zur Unterseite des Faservlieses 1.1 bzw. zur Oberfläche der unteren Schäumwerkzeughälfte ausgerichtet.

Das Faservlies 1.1 ist aus Polyethylenfasern, Polypropylenfasern, einer Mischung aus Polyethylen- und Polypropylenfasern, Baumwollfasern oder einer Mischung aus Polyethylen- und Naturfasern gebildet. Es kann sich dabei insbesondere um ein Volumenvlies handeln. Es besitzt eine Luftdurchlässigkeit im Bereich von 150 bis 2.000 Liter/m²s (gemessen bei einem Prüfdruck von 100 Pa). Sein längenbezogener Strömungswiderstand liegt im Bereich von 5 kNs/m⁴ bis 40 kNs/m⁴, vorzugsweise im Bereich von 5 kNs/m⁴ bis 25 kNs/m⁴.

Das Faservlies 1.1 wurde keiner besonderen mechanischen und/oder chemischen Oberflächenbehandlung, wie etwa einer Imprägnierung unterzogen. Das zu hinterschäumende Faservlies 1.1 wird beispielsweise als zweidimensionales Stanzteil aus einer Faservliesbahn ausgeschnitten. Über den Querschnitt betrachtet weist das Faservlies eine im Wesentlichen gleichmäßige Dichte sowie einen im Wesentlichen gleichmäßigen Strömungswiderstand auf. Als Faservlies kann bei der erfindungsgemäßen Verkleidung somit eine preisgünstige Standardware zur Anwendung kommen.

Das Flächengewicht des Faservlieses 1.1 liegt im Bereich von 100 g/m² bis 1.600 g/m², vorzugsweise im Bereich von 100 g/m² bis 1.200 g/m². Die Schichtdicke des Faservlieses 1.1 beträgt beispielsweise 2 mm bis 30 mm, insbesondere 5 mm bis 20 mm.

Für die Erzeugung der Schalldämmschicht 1.2 wird die Verhautung des PUR-Weichschaumstoffs beim Ausreagieren seiner Mischungskomponenten im Schäumwerkzeug genutzt. Die Dicke und Dichte der Dämmschicht 1.2 wird über die Rezeptur der Reaktionsmischung und/oder die Werkzeugtemperatur gesteuert bzw. beeinflusst. Die Dicke der Schalldämmschicht 1.2 beträgt beispielsweise 1 mm bis 5 mm. Ihre Rohdichte liegt beispielsweise im Bereich von 0,08 bis 2,0 g/cm³, vorzugsweise im Bereich von 0,08 bis 1,4 g/cm³. Die Rohdichte der Schaumstoffschicht 1.3 liegt dagegen im Bereich von 0,02 bis 0,1 g/cm³, beispielsweise im Bereich von 0,02 bis 0,06 g/cm³

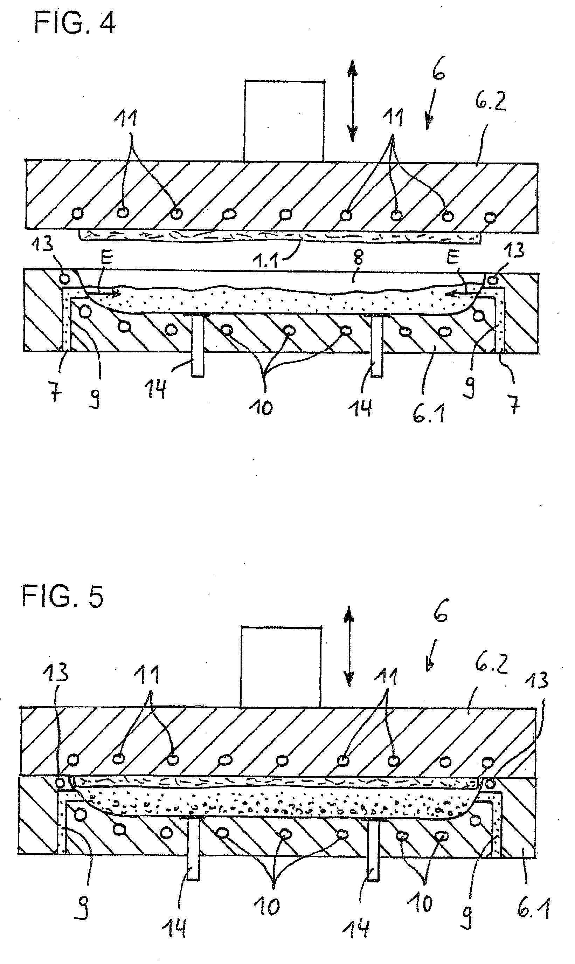

Die Hinterschäumung des Faservlieses 1.1 kann sowohl in einem geschlossenen als auch in einem offenen Schäumwerkzeug erfolgen. Die Herstellung einer erfindungsgemäßen Verkleidung wird nun unter Bezug auf die Figuren 4 bis 10 erläutert.

In Fig. 4 ist ein mehrteiliges Schäumwerkzeug 6 schematisch dargestellt. Weitere Anlagenelemente wie Lagertanks, Behälter mit Rührwerk, Dosierpumpen, Rohrleitungen, Mischköpfe, etc., sind der Übersichtlichkeit halber nicht dargestellt. Die Hauptkomponenten (Isocyanat und Polyol) der Reaktionsmischung werden aus Lagertanks in Zwischenbehälter überführt, auf die erforderliche Temperatur gebracht und über Dosieraggregate einem Mischkopf (nicht gezeigt) zugeleitet, der an einer oder mehreren Angussöffnungen 7 der unteren Schäumwerkzeughälfte 6.1 angeschlossen ist.

Der Reaktionsmischung bzw. deren Hauptkomponenten kann Füllstoff zugegeben werden. Als Füllstoff eignen sich beispielsweise Bariumsulfat und/oder Kreide. Optional kann allerdings auch auf Füllstoff verzichtet werden. Der Füllstoff (BaSO₄ und/oder Kreide) wird gegebenenfalls mit CO₂ kombiniert. Durch die Zugabe von CO₂ lässt sich die Rohdichte der Weichschaumschicht 1.3 reduzieren.

Das Schäumwerkzeug 6 weist eine untere Werkzeughälfte 6.1 und eine obere Werkzeughälfte 6.2 auf, die zusammen im geschlossenen Zustand des Werkzeuges eine der herzustellenden Verkleidung entsprechende Kavität 8 definieren. Die obere Werkzeughälfte 6.2 ist relativ zu der unteren Werkzeughälfte 6.1 heb- und senkbar ausgebildet.

An der Unterseite der Werkzeughälfte 6.2 ist ein Zuschnitt eines Faservlieses 1.1 lösbar fixiert. Der Zuschnitt wird beispielsweise durch Ausstanzen erzeugt. Zur lösbaren Fixierung des Faservlieses 1.1 können an der Unterseite der Werkzeughälfte 6.2 beispielsweise Nadeln, insbesondere Widerhakenelemente aufweisende Nadeln, Klettbänder, Greifelemente oder dergleichen vorgesehen sein.

Das Einbringen der Reaktionsmischung in die Werkzeugkavität 8 erfolgt über einen oder mehrere in der unteren Werkzeughälfte (Formhälfte) 6.2 ausgebildete Zufuhrkanäle 9. Der jeweilige Zufuhrkanal ist so ausgebildet, dass die Einspritzfließrichtung E der Reaktionsmischung im Wesentlichen parallel zur Unterseite des Faservlieses 1.1 bzw. zur Bodenfläche 8.1 der Werkzeugkavität ausgerichtet ist.

Das Einspritzen der Reaktionsmischung in die Werkzeugkavität 8 erfolgt im geöffneten Zustand des Schäumwerkzeuges 6. Die Reaktionsmischung berührt das Faservlies 1.1 somit zunächst nicht. Nachdem ein begrenztes bzw. vorbestimmtes Volumen der Reaktionsmischung in das Schäumwerkzeug 6 eingebracht ist, wird das Schäumwerkzeug geschlossen. Die direkte stoffschlüssige Verbindung zwischen der Reaktionsmischung und dem Faservlies 1.1 ergibt sich beim Ausreagieren der Reaktionsmischung, die in der Kavität 8 expandiert. Das Faservlies 1.1 schwimmt dabei praktisch auf dem aufsteigenden PUR-Weichschaum auf.

Das Schäumwerkzeug 6 ist mit einer Temperiervorrichtung versehen, die getrennt steuerbare, in den Werkzeughälften 6.1, 6.2 integrierte Fluidkanäle umfasst, mittels denen vorbestimmte, die Kavität 8 begrenzende Oberflächenbereiche des Schäumwerkzeuges 6 gezielt temperiert (gekühlt) werden können.

Temperierung von Oberflächenbereichen des Schäumwerkzeuges 6 bedeutet im vorliegenden Kontext eine relative Kühlung der betreffenden Oberflächenbereiche gegenüber der wärmeren Weichschaum-Reaktionsmischung.

Die untere Werkzeughälfte 6.1 weist eine Gruppe von Fluidkanälen 10 auf, die an einer gemeinsamen, ein Fluid zuführenden Verteilerleitung (nicht gezeigt) und an einer gemeinsamen, das Fluid abführenden Sammelleitung (nicht gezeigt) angeschlossen sind. Die Temperatur des dieser Gruppe von Fluidkanälen zugeführten Fluids ist so geregelt, dass die diesen Fluidkanälen 10 nächstliegende Werkzeugoberfläche eine Temperatur im Bereich von 50°C bis 90°C, z.B. ca. 70°C ± 15°C aufweist bzw. sich dort eine Temperatur in dem genannten Temperaturbereich einstellt.

Die in der oberen Werkzeughälfte 6.2 integrierten Fluidkanäle 11 bilden eine zweite Gruppe von Fluidkanälen, die an einer anderen gemeinsamen, ein Fluid zuführenden Verteilerleitung (nicht gezeigt) und an einer weiteren, dieses Fluid abführenden Sammelleitung (nicht gezeigt) angeschlossen sind, wobei die Temperatur des Fluids so geregelt wird, dass die den Fluidkanälen 11 nächstliegende Oberfläche der oberen Werkzeughälfte 6.2 eine Temperatur im Bereich von 15°C bis 60°C, z.B. ca. 35°C ± 15°C aufweist bzw. sich dort eine Temperatur in diesem Temperaturbereich einstellt.

Die Temperaturdifferenz zwischen den die Kavität begrenzenden Oberflächen der Werkzeughälften 6.1, 6.2 beträgt mindestens 15°C, vorzugsweise mindestens 25°C.

Die Schaumstruktur der Weichschaumstoffschicht entsteht im Wesentlichen durch die bei der chemischen Vernetzung der Reaktionsmischung entstehenden Treibgase. Das gegebenenfalls zugegebene CO₂ unterstützt den Schäumvorgang. Durch die relative Kühlung der Oberfläche der oberen Werkzeughälfte 6.2 gegenüber der Oberfläche der unteren Werkzeughälfte 6.1 wird der Schäumvorgang in der Reaktionsmischung in dem an die kühlere Werkzeugoberfläche angrenzenden Bereich unterdrückt, so dass dort eine integrale, im wesentlichen porenfreie Haut 1.2 mit einer Dicke von mindestens 0,5 mm, vorzugsweise mindestens 0,8 mm, besonders bevorzugt mindestens 1 mm erzeugt wird. Die Haut wirkt als schallisolierende Dämmschicht 1.2. Sie ist vorzugsweise luftdicht oder zumindest im wesentlichen luftdicht. Die Haut 1.2 verbindet sich stoffschlüssig mit der Rückseite des Faservlieses 1.1.

Das Faservlies 1.1 weist bei seiner Anbringung an dem Schäumwerkzeug 6 eine Temperatur auf, die erheblich unterhalb der Temperatur der Oberfläche der oberen Werkzeughälfte 6.1 liegt. Nach einer vorteilhaften Ausgestaltung der Erfindung ist vorgesehen, dass das Faservlies 1.1 auf eine Temperatur im Bereich von 10°C bis 15°C gekühlt und in diesem gekühlten Zustand an der oberen Werkzeughälfte 6.2 fixiert wird. An der wärmeren Oberfläche der unteren Werkzeughälfte 6.2 bildet sich dagegen durch den Schäumvorgang ein offenporiger Schallabsorber 1.3, der eine offenporige Oberfläche oder lediglich eine sehr dünne Haut 1.4 aufweist, wobei diese dünne Haut 1.4 aber schalldurchlässig oder schalltransparent ist. Die schalldurchlässige Haut 1.4 hat eine Dicke von weniger als 400 µm, vorzugsweise weniger als 250 µm. Sie ist beispielsweise dünner als 150 µm und kann auch nur partiell ausgebildet sein.

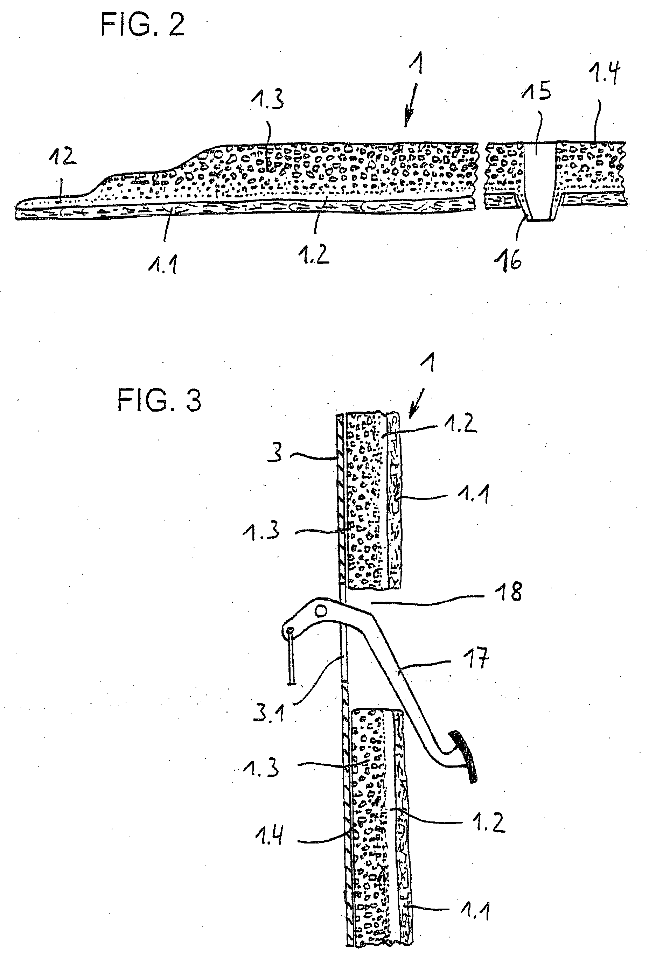

Die erfindungsgemäße Verkleidung 1 weist bei Bedarf randseitig eine flexible Dichtlippe 12 auf, die eventuell vorhandene Fertigungstoleranzen ausgleichen kann und so eine dichte Anpassung der Verkleidung 1 an angrenzenden Bauteile bzw. Karosserieabschnitte sicherstellt (vgl. Fig. 2).

Zur im Wesentlichen porenfreien Ausgestaltung der Dichtlippe 12 sind in der unteren Formhälfte 6.1 nahe dem der Dichtlippe entsprechenden Kavitätsabschnitt Fluidkanäle 13 vorgesehen, die ebenfalls an der der zweiten Gruppe von Fluidkanälen 10 zugeordneten Fluid-Verteilerleitung (nicht gezeigt) angeschlossen sind. Das die Fluidkanäle 10 und 13 durchströmende Fluid weist somit die gleiche Temperatur auf.

In der unteren Formhälfte 6.1 sind zudem Stößel 14 integriert, mittels denen das fertige Formteil, also die Verkleidung 1 nach Öffnen des Schäumwerkzeuges 6 ausgeworfen werden kann.

In vielen schallisolierenden Verkleidungen für Karosserieteile müssen Durchbrüche ausgebildet werden, die beispielsweise der Hindurchführung von Kabeln, Schlauchleitungen und/oder mechanischen Aggregaten dienen. Wie in Fig. 2 gezeigt, ist an einem Durchbruch 15 für ein Kabel oder eine Schlauchleitung vorzugsweise eine elastisch aufweitbare Tülle 16 zur abgedichteten Hindurchführung des Kabels bzw. der Schlauchleitung (nicht gezeigt) auf der verhauteten Seite der Verkleidung 1, also auf der die integrale, im wesentlichen porenfreie Haut 1.2 aufweisenden Seite ausgebildet.

In Fig. 3 ist in Schnittansicht ein Abschnitt einer Stirnwand 3 eines Kraftfahrzeuges mit einer einen Durchbruch 3.1 der Stirnwand durchgreifenden Pedalarie 17 schematisch dargestellt. Auf der Innenseite der Stirnwand 3 ist eine erfindungsgemäße Verkleidung 1 angeordnet, die einen Durchbruch 18 für die Pedalarie 17 aufweist.

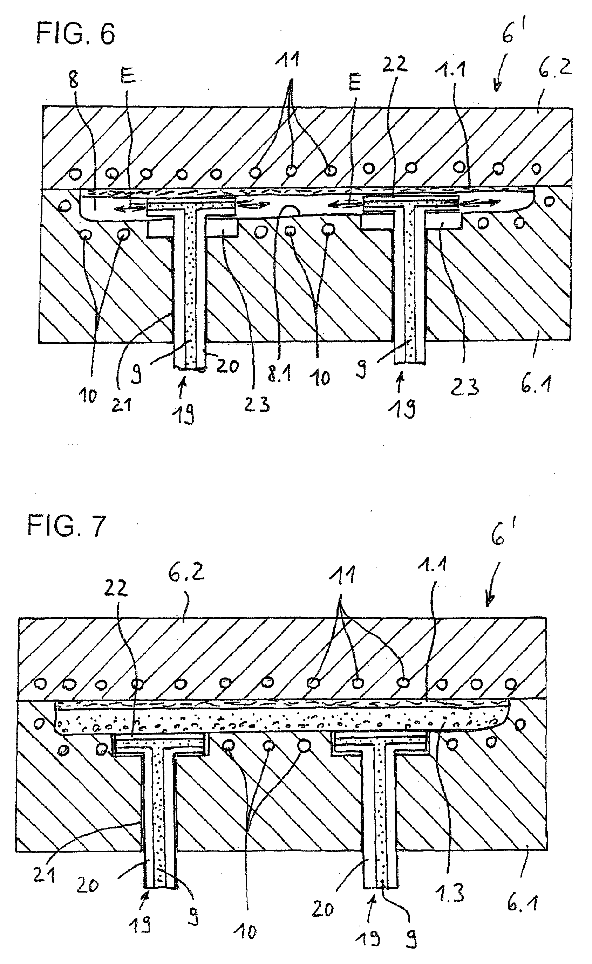

Die Figuren 6 und 7 zeigen schematisch ein weiteres Schäumwerkzeug 6' zur Herstellung einer erfindungsgemäßen Verkleidung 1. Im Unterschied zu dem Schäumwerkzeug 6 gemäß Fig. 4 sind in der unteren Formhälfte 6.1 verschiebbare Einspritzelemente 19 eingesetzt. Die Einspritzelemente 19 weisen jeweils ein Rohrteil 20 auf, das in einer Bohrung 21 der unteren Werkzeughälfte 6.1 axial verschiebbar aufgenommen ist. Das Rohrteil 20 ist an seinem der Kavität 8 des Schäumwerkzeuges 6' zugewandten Ende mit einem Umlenkelement 22 versehen, über das die Polyol und Isocyanat enthaltende Reaktionsmischung gegenüber dem Rohrteil radial umgelenkt wird. Das Umlenkelement 22 stellt sicher, dass die Reaktionsmischung im wesentlichen nicht senkrecht auf das Faservlies 1.1 gespritzt wird. Aufgrund des Umlenkelements 22 ist die Einspritzfließrichtung E der Reaktionsmischung vielmehr im wesentlichen parallel zur Oberfläche des Faservlieses 1.1 bzw. zur Bodenfläche 8.1 der Kavität 8 ausgerichtet. Das Umlenkelement 22 kann beispielsweise in Form einer scheibenförmigen Platte ausgebildet sein.

Es ist bei dem erfindungsgemäßen Verfahren allerdings durchaus möglich, dass die Reaktionsmischung beim Einspritzen in die Kavität 8 auch mit dem Faservlies 1.1 direkt in Kontakt kommt und entlang der Unterseite des Faservlieses entlang fließt. Die Einspritzfließrichtung E und damit die Hauptfließrichtung bzw. Druckkraft der Reaktionsmischung sind jedoch im Wesentlichen parallel zur Unterseite des Faservlieses 1.1 gerichtet. Es ergibt sich somit im Wesentlichen eine laminare Strömung der Reaktionsmischung parallel zur Unterseite des Faservlieses 1.1.

Es liegt ferner im Rahmen der Erfindung, die poröse Schallabsorberschicht 1.1 (z.B. Faservlies) nur partiell in einem oder mehreren Teilbereichen der erfindungsgemäßen Verkleidung 1 vorzusehen. Dies gilt insbesondere im Falle eines Durchbruchs zur Durchleitung eines Kabels oder einer Schlauchleitung durch die erfindungsgemäße Verkleidung 1. In einem Bereich, wo kein Faservlies 1.1 vorgesehen ist, kann die Reaktionsmischung gegebenenfalls auch senkrecht gegen die obere Werkzeughälfte 6.2 in die Kavität eingespritzt (eingeschossen) werden. Im Bereich des Faservlieses 1.1 wird sie jedoch nicht senkrecht gegen dieses, sondern im Wesentlichen parallel zu dessen Unterseite eingespritzt.

Die in die Kavität 8 mündenden Enden der Bohrungen 21 sind jeweils mit einer Ausnehmung 23 erweitert, in die das Umlenkelement 22 nach Abschluss der Einspritzphase eingefahren wird. Die Einspritzelemente 19 dienen zudem als Stößel, um das fertige Formteil aus der Werkzeugkavität auszuwerfen.

Alternativ kann die Reaktionsmischung auch in eine Kavität eines temperierten Formwerkzeuges (nicht gezeigt) eingesprüht oder eingegossen und ein Zuschnitt eines Faservlieses 1.1 sodann auf die Oberseite der eingebrachten Reaktionsmischung aufgelegt werden. Die Oberseite des frisch aufgetragenen Weichschaums und/oder das Faservlies 1.1 werden dabei vorzugsweise gegenüber dem temperierten Formwerkzeug gekühlt. Der Faservlieszuschnitt wird dabei vorzugsweise mit einer Halterung gegenüber der aufsteigenden Reaktionsmischung fixiert. Das Faservlies 1.1 "schwimmt" somit beim Expandieren (Aufschäumen) der Reaktionsmischung auf der Weichschaumschicht 1.3 auf und verbindet sich beim Aushärten des Schaums stoffschlüssig mit der integralen, im wesentlichen luftdichten Haut 1.2 der Weichschaumschicht 1.3.

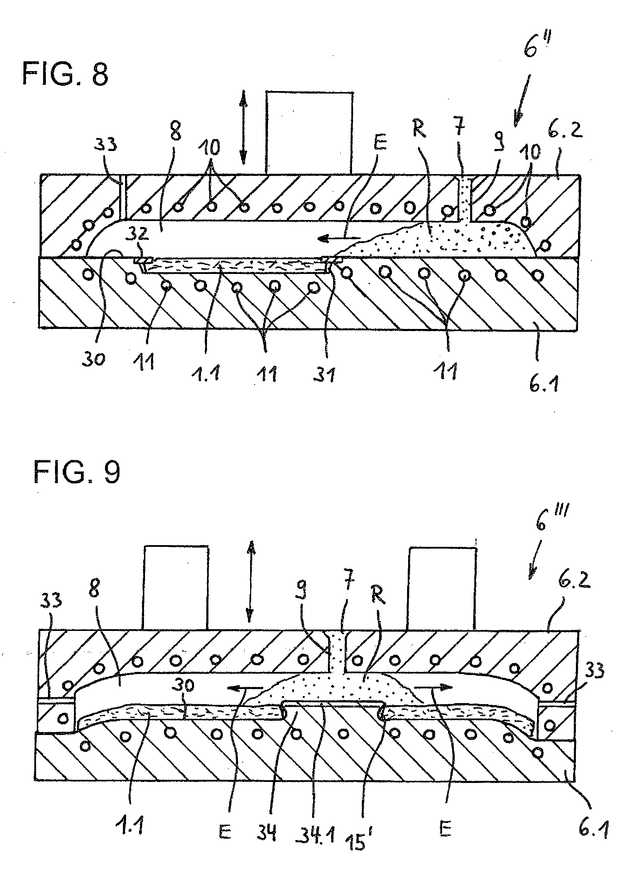

In den Figuren 8 bis 10 sind schematisch weitere mehrteilige Schäumwerkzeuge zur Herstellung von erfindungsgemäßen Verkleidungen dargestellt.

Die aus einem porösen Absorber, vorzugsweise aus einem Faservlies, insbesondere Volumenvlies, oder aus offenzelligem, luftdurchlässigem Schaumstoff gebildete Schallabsorberschicht 1.1 kann vollflächig oder partiell an einer Seite der geschäumten Schalldämmschicht 1.2 angeordnet sein.

Eine erfindungsgemäßen Verkleidung mit einer nur eine Teilfläche der Schalldämmschicht 1.2 abdeckenden Schallabsorberschicht kann mit einem Schäumwerkzeug 6" hergestellt werden, wie es beispielhaft in Fig. 8 skizziert ist. Die untere Werkzeughälfte 6.1 definiert eine Formwand (Formfläche) 30, in der mindestens eine Vertiefung (Tasche) 31 zur Aufnahme eines Zuschnitts der porösen, luftdurchlässigen Schallabsorberschicht 1.1 ausgebildet ist. Der durch die Vertiefung 31 definierte Hohlraum wird durch den darin eingelegten Absorberzuschnitt 1.1 im Wesentlichen vollständig ausgefüllt. Am Rand der Vertiefung 31 bzw. deren Übergang zur Formwand 30 der Werkzeughälfte 6.1 ist ein umlaufender Rahmen 32 aufgelegt. Der Rahmen 32 verhindert, dass die zur Herstellung der Schaumstoffschicht in die Kavität 8 des Schäumwerkzeuges 6" eingespritzte Reaktionsmischung R unter die Schallabsorberschicht 1.1 fließt. Der Rahmen 32 überdeckt den Rand der Schallabsorberschicht 1.1 und erstreckt sich über den Rand der Vertiefung 31 nach außen. Der Rahmen 32 ist flach ausgebildet und besteht beispielsweise aus Stahl. Er ist mit Trennmittel (Antihaftmittel) beschichtet.

Der mindestens eine Einspritzkanal 9 (so genannter Anschießpunkt) des Schäumwerkzeuges 6" ist in Bezug zu der mindestens einen eine Schallabsorberschicht aufnehmenden Vertiefung 31 so angeordnet, dass die Reaktionsmischung R im Wesentlichen parallel zur Rückseite der Schallabsorberschicht 1.1 in das Schäumwerkzeug 6" eingebracht wird. In Fig. 8 ist durch den Pfeil E angedeutet, dass die über den Einspritzkanal 9 in die Kavität eingebrachte Reaktionsmischung R im Wesentlichen parallel zur Rückseite des in die Vertiefung 31 eingelegten Absorberzuschnitts 1.1 fließt. Das Schäumwerkzeug weist ferner eine in die Kavität 8 mündende Entlüftungsbohrung 33 auf, die beispielsweise in der oberen Werkzeughälfte 6.2 ausgebildet ist.

Mit 10 und 11 sind wiederum unterschiedliche Gruppen von Fluidkanälen bezeichnet. Durch die Fluidkanäle 10 wird ein Fluid geleitet, dessen Temperatur im Bereich von 50°C bis 90°C liegt, während durch die Fluidkanäle 11 ein Fluid geleitet wird, dessen Temperatur im Bereich von 15°C bis 60°C liegt. Die Temperaturen der Fluide werden so geregelt, dass sich zwischen den die Kavität 8 begrenzenden Oberflächen der Werkzeughälften 6.1, 6.2 eine Temperaturdifferenz von mindestens 15°C, vorzugsweise mindestens 20°C einstellt.

In Fig. 9 ist ein Schäumwerkzeug 6"' zur Herstellung einer erfindungsgemäßen Verkleidung skizziert, die mindestens einen Durchbruch zur Hindurchführung einer Leitung und/oder eines mechanischen Bauteils aufweisen soll. Hierzu wird ein Zuschnitt einer Schallabsorberschicht 1.1 verwendet, in weichem der mindestens eine Durchbruch 15' bereits ausgeschnitten ist.

Die die Kavität 8 begrenzende Formwand 30 des Schäumwerkzeuges ist mit mindestens einem sockel- oder stumpfförmigen Vorsprung 34 versehen, der dem Durchbruch 15' der Schallabsorberschicht 1.1 zugeordnet ist. Der Vorsprung 34 durchdringt den Durchbruch 15' der Schallabsorberschicht 1.1, wenn diese in die Kavität 8 des Schäumwerkzeuges 6"' eingelegt ist. Der Vorsprung 34 hat einen umlaufenden Hinterschnitt, so dass er den Rand des Durchbruchs 15' an der zu hinterschäumenden Rückseite der Schallabsorberschicht 1.1 abdeckt und so verhindert, dass die eingespritzte Reaktionsmischung R über den Durchbruch 15' zur Vorderseite der Schallabsorberschicht 1.1 fließt. Der Hinterschnitt ist beispielsweise durch eine Prallplatte 34.1 gebildet, die an der äußeren Stirnseite des Vorsprungs 34 befestigt ist.

Mit Ausnahme des den jeweiligen Durchbruch 15' durchdringenden Vorsprungs 34 deckt die vorzugsweise aus einem luftdurchlässigen Vlies bestehende Schallabsorberschicht 1.1 die die Kavität 8 begrenzende Formwand 30 der Werkzeughälfte 6.1 im Wesentlichen vollflächig ab. Der mindestens eine Einspritzkanal 9 (Anschießpunkt 7) des Schäumwerkzeuges 6"' mündet gegenüberliegend der Prallplatte 34.1 oder Stirnseite des Vorsprungs 34 in die Kavität 8, so dass die in die geschlossene Kavität eingespritzte Reaktionsmischung R im Wesentlichen parallel zur Rückseite der Schallabsorberschicht 1.1 in das Schäumwerkzeug eingebracht wird, wie in Fig. 9 durch die Pfeile E angedeutet ist. Das Schäumwerkzeug 6"' ist wiederum mit Entlüftungskanälen 33 versehen, die nahe dem Außenrand der eingelegten Schallabsorberschicht 1.1 in die Kavität 8 münden.

Eine weitere vorteilhafte Ausgestaltung der erfindungsgemäßen Verkleidung besteht darin, dass allein ihre Schallabsorberschicht eine flexible Dichtlippe 12' bildet. Die Schallabsorberschicht 1.1 ist hierzu randseitig verprägt, d.h. bleibend verdichtet. Sie überragt dabei seitlich den Rand der geschäumten Schalldämmschicht 1.2. Die Dichtlippe 12' kann sich dabei entlang des gesamten Umfangs oder auch nur entlang eines oder mehrerer Teilabschnitte des Randes der Schalldämmschicht 1.2 erstrecken.

Die randseitige Verprägung der vorzugsweise aus einem thermoplastischen Vlies bestehenden Schallabsorberschicht 1.1 ist in Fig. 10 dargestellt. Die obere Werkzeughälfte 6.2 und die untere Werkzeughälfte 6.1 des Schäumwerkzeuges 6^{IV} bilden am Rand der Kavität einen Einklemmbereich 35. Die auf die untere Werkzeughälfte 6.1 aufgelegte Schallabsorberschicht 1.1 ist so bemessen, dass ihr Rand nach Schließen des Schäumwerkzeuges 6^{IV} in dem Einklemmbereich 35 eingespannt ist. Das randseitige Einspannen der Schallabsorberschicht 1.1 verhindert, dass die in die geschlossene Kavität eingespritzte Reaktionsmischung den Rand der Schallabsorberschicht 1.1 umfließt. Das Einbringen der Reaktionsmischung zur Hinterschäumung der Schallabsorberschicht 1.1 erfolgt mittels eines oder mehrerer axial verschiebbarer Einspritzelemente 19, die den in Figuren 6 und 7 dargestellten Einspritzelementen 19 entsprechen. Die Dicke der luftdurchlässigen, thermoplastischen Schallabsorberschicht 1.1 liegt beispielsweise im Bereich von 10 mm bis 20 mm. Die Dicke der flexiblen Dichtlippe 12' beträgt dagegen etwa 2 bis 3 mm. Das Schäumwerkzeug 6^{IV} weist eine dem Einklemmbereich 35 zugeordnete Heizeinrichtung auf, mit welcher der dort verdichtete Rand der thermoplastischen Schallabsorberschicht 1.1 auf eine Temperatur oberhalb von 100°C, beispielsweise auf ca. 120°C erwärmt werden kann. Die Heizeinrichtung umfasst in dem dargestellten Ausführungsbeispiel Fluidkanäle 36, in denen eine geeignete Flüssigkeit, beispielsweise ein Öl zirkuliert. Alternativ kann die Heizeinrichtung auch elektrische Heizelemente aufweisen. Im übrigen ist das Schäumwerkzeug 6^{IV} wiederum mit Fluidkanälen 10, 11 versehen, wobei die Temperaturen der darin strömenden Fluide wie oben unter Bezug auf Fig. 8 erwähnt geregelt werden.

Nach einer weiteren bevorzugten Ausgestaltung der erfindungsgemäßen Verkleidung ist vorgesehen, dass der poröse Absorber 1.1 oder ein zusätzlich darauf angebrachtes Abdeckvlies aus einem flammhemmenden Faservlies, vorzugsweise aus Polyestervlies gebildet ist. Die Verkleidung ist dabei vorzugsweise so ausgerüstet, dass sie eine Temperaturbeständigkeit von mindestens 150°C besitzt. Die erfindungsgemäße Verkleidung lässt sich so vorteilhaft im motornahen Bereich eines Kraftfahrzeuges oder an ähnlich temperaturbelasteten Bereichen einsetzen.

Die Ausführung der Erfindung ist nicht auf die vorstehend beschriebenen Ausführungsbeispiele beschränkt. Vielmehr sind verschiedene Varianten denkbar, die auch bei grundsätzlich abweichender Gestaltung von dem in den Ansprüchen wiedergegebenen Erfindungsgedanken Gebrauch machen. So kann anstelle des Faservlieses auch ein poröser, offenporiger Schaumstoff als Schallabsorberschicht verwendet werden. Ferner kann die erfindungsgemäße Verkleidung 1 beispielsweise auch mehrere partielle Schalldämmbereiche, d.h. mehrere integrale, voneinander beabstandete, im Wesentlichen porenfreie, luftundurchlässige Hautbereiche aufweisen, die auf der Verkleidung 1 entsprechend den akustischen Anforderungen an die Schalldämmung gezielt angeordnet sind.

## Patentansprüche

1. Leichte, schallisolierende Verkleidung (1) für ein Karosserieteil eines Kraftfahrzeuges, insbesondere in Form einer leichten Stirnwandverkleidung, umfassend eine Schallabsorberschicht (1.1), eine mit der Schallabsorberschicht (1.1) direkt verbundene, luftdichte Schalldämmschicht (1.2) und eine sich daran anschließende Schaumstoffschicht (1.3), wobei die Schallabsorberschicht (1.1) aus einem porösen Absorber, vorzugsweise einem Faservlies oder Schaumstoff gebildet ist, **dadurch gekennzeichnet, dass** der poröse Absorber (1.1) bei einem Prüfdruck von 100 Pa eine Luftdurchlässigkeit im Bereich von 150 bis 2.000 Liter/m²s aufweist, wobei die Schalldämmschicht (1.2) aus einer integralen, mindestens 0,5 mm dicken Hautschicht der Schaumstoffschicht (1.3) gebildet und durch Hinterschäumen des porösen Absorbers (1.1), ohne Schaumdurchschlag mit dem porösen Absorber (1.1) stoffschlüssig verbunden ist.

2. Verkleidung (1) nach Anspruch 1, **dadurch gekennzeichnet, dass** der poröse Absorber (1.1) einen längenbezogenen Strömungswiderstand im Bereich von 5 kNs/m⁴ bis 40 kNs/m⁴, vorzugsweise im Bereich von 5 kNs/m⁴ bis 25 kNs/m⁴ aufweist.

3. Verkleidung (1) nach Anspruch 1 oder 2, **dadurch gekennzeichnet, dass** der poröse Absorber (1.1) über seinen Querschnitt betrachtet eine gleichmäßige Dichte und/oder einen gleichmäßigen Strömungswiderstand aufweist.

4. Verkleidung (1) nach einem der Ansprüche 1 bis 3, **dadurch gekennzeichnet, dass** der poröse Absorber (1.1) ein Flächengewicht von 100 g/m² bis 1.600 g/m² und/oder eine Dicke im Bereich von 2 mm bis 30 mm aufweist.

5. Verkleidung (1) nach einem der Ansprüche 1 bis 4, **dadurch gekennzeichnet, dass** der poröse Absorber (1.1) aus einem Faservlies aus Polyethylenfasern, Polypropylenfasern, einer Mischung aus Polyethylen- und Polypropylenfasern, Baumwollfasern oder einer Mischung aus Polyethylen- und Naturfasern gebildet ist.

6. Verkleidung (1) nach einem der Ansprüche 1 bis 5, **dadurch gekennzeichnet, dass** die Schalldämmschicht (1.2) eine Dicke im Bereich von 1 mm bis 5 mm aufweist.

7. Verkleidung (1) nach einem der Ansprüche 1 bis 6, **dadurch gekennzeichnet, dass** die Schalldämmschicht (1.2) eine Rohdichte im Bereich von 0,08 bis 2,0 g/cm³, vorzugsweise im Bereich von 0,08 bis 1,4 g/cm³ aufweist.

8. Verkleidung (1) nach einem der Ansprüche 1 bis 7, **dadurch gekennzeichnet, dass** die Schalldämmschicht (1.2) örtlich unterschiedlich dicke Flächenbereiche aufweist, wobei der Dickenunterschied mindestens 1 mm beträgt.

9. Verkleidung (1) nach einem der Ansprüche 1 bis 8, **dadurch gekennzeichnet, dass** die Schaumstoffschicht (1.3) eine Rohdichte im Bereich von 0,02 bis 0,06 g/cm³ aufweist.

10. Verkleidung (1) nach einem der Ansprüche 1 bis 9, **dadurch gekennzeichnet, dass** ihr Gesamtflächengewicht weniger als 2.500 g/m², vorzugsweise weniger als 2.000 g/m² beträgt.

11. Verfahren zur Herstellung einer leichten, schallisolierenden Verkleidung (1) für ein Karosserieteil eines Kraftfahrzeuges, insbesondere einer leichten Stirnwandverkleidung, bei dem eine poröse Schallabsorberschicht (1.1) mit einer Polyol und Isocyanat enthaltenden Reaktionsmischung in einem Schäumwerkzeug (6, 6') direkt hinterschäumt wird, **dadurch gekennzeichnet, dass** als poröse Schallabsorberschicht (1.1) ein Absorber verwendet wird, der bei einem Prüfdruck von 100 Pa eine Luftdurchlässigkeit im Bereich von 150 bis 2.000 Liter/m²s aufweist, dass die Reaktionsmischung parallel zur Rückseite der Schallabsorberschicht (1.1) und/oder parallel zur Bodenfläche (8.1) einer Kavität des Schäumwerkzeuges (6, 6') in das Schäumwerkzeug eingebracht wird, und dass ein vorbestimmter Oberflächenteilbereich des Schäumwerkzeuges (6, 6') so temperiert und/oder während des Einbringens das Mischungsverhältnis von Polyol zu Isocyanat so geändert wird, dass sich aus der Reaktionsmischung eine Schaumstoffschicht (1.3) ergibt, die eine integrale, luftdichte, mindestens 0,5 mm dicke Hautschicht (1.2) aufweist, welche ohne Schaumdurchschlag mit der Schallabsorberschicht (1.1) stoffschlüssig verbunden ist.

12. Verfahren nach Anspruch 11, **dadurch gekennzeichnet, dass** ein begrenztes Volumen der Reaktionsmischung in das Schäumwerkzeug (6, 6') derart eingebracht wird, dass die Reaktionsmischung die poröse Schallabsorberschicht (1.1) zunächst nicht berührt, wobei sich anschließend die stoffschlüssige Verbindung zwischen der Reaktionsmischung und der porösen Schallabsorberschicht (1.1) beim Ausreagieren der Reaktionsmischung ergibt.

13. Verfahren nach Anspruch 11 oder 12, **dadurch gekennzeichnet, dass** das Hinterschäumen der porösen Schallabsorberschicht (1.1) in einem offenen Schäumwerkzeug (6) durchgeführt wird.

14. Verfahren nach Anspruch 11 oder 12, **dadurch gekennzeichnet, dass** das Hinterschäumen der porösen Schallabsorberschicht (1.1) in einem geschlossenen Schäumwerkzeug (6') durchgeführt wird.

15. Verfahren nach Anspruch 14, **dadurch gekennzeichnet, dass** die Reaktionsmischung unter Verwendung einer Umlenkeinrichtung (22) in das geschlossene Schäumwerkzeug (6') eingespritzt wird, wobei die Umlenkeinrichtung (22) der Reaktionsmischung eine parallel zur Rückseite der porösen Schallabsorberschicht (1.1) gerichtete Einspritzfließrichtung (E) aufzwingt.

16. Verfahren nach einem der Ansprüche 11 bis 15, **dadurch gekennzeichnet, dass** die verwendete poröse Schallabsorberschicht (1.1) über ihren Querschnitt betrachtet eine gleichmäßige Dichte und/oder einen gleichmäßigen Strömungswiderstand aufweist.

17. Verfahren nach einem der Ansprüche 11 bis 16, **dadurch gekennzeichnet, dass** die poröse Schallabsorberschicht (1.1) einen längenbezogenen Strömungswiderstand im Bereich von 5 kNs/m⁴ bis 40 kNs/m⁴, vorzugsweise im Bereich von 5 kNs/m⁴ bis 25 kNs/m⁴ aufweist.

18. Verfahren nach einem der Ansprüche 11 bis 17, **dadurch gekennzeichnet, dass** die verwendete poröse Schallabsorberschicht (1.1) ein Flächengewicht von 100 g/m² bis 1.600 g/m² und/oder eine Dicke im Bereich von 2 mm bis 30 mm aufweist.

19. Verfahren nach einem der Ansprüche 11 bis 18, **dadurch gekennzeichnet, dass** die verwendete poröse Schallabsorberschicht (1.1) aus Polyethylenfasern, Polypropylenfasern, einer Mischung aus Polyethylen- und Polypropylenfasern, Baumwollfasern oder einer Mischung aus Polyethylen- und Naturfasern gebildet ist.

## Claims

1. A lightweight sound insulating lining (1) for a body component of a motor vehicle, in particular in the form of a lightweight front wall lining, comprising a sound absorbing layer (1.1), a sound insulating layer (1.2) which is directly connected to the sound absorbing layer (1.1) and air tight, as well as an adjoining foam layer (1.3), wherein the sound absorbing layer (1.1) is made of a porous absorber, preferably a fiber fleece or a foam, **characterized in that** the porous absorber (1.1) has an air permeability in the range of 150 to 2000 liters/m²s at a test pressure of 100 Pa, wherein the sound insulating layer (1.2) is formed by an integral skin layer of the foam layer (1.3) with a thickness of at least 0.5 mm and integrally joined to the porous absorber (1.1) by back-foaming the porous absorber (1.1) without penetration of foam.

2. The lining (1) according to claim 1, **characterized in that** the porous absorber (1.1) has a length-specific flow resistance in the range of 5 kNs/m⁴ to 40 kNs/m⁴, preferably in the range of 5 kNs/m⁴ to 25 kNs/m⁴.

3. The lining (1) according to claim 1 or 2, **characterized in that** the porous absorber (1.1) has a uniform density as well as a uniform flow resistance across its cross section.

4. The lining (1) according to one of claims 1 to 3, **characterized in that** the porous absorber (1.1) has a weight per area of 100 g/m² to 1600 g/m² and/or a thickness in the range of 2 mm to 30 mm.

5. The lining (1) according to one of claims 1 to 4, **characterized in that** the porous absorber (1.1) is made of a fiber fleece made of polyethylene fibers, polypropylene fibers, a mixture of polyethylene and polypropylene fibers, cotton fibers or a mixture of polyethylene and natural fibers.

6. The lining (1) according to one of claims 1 to 5, **characterized in that** the sound insulating layer (1.2) has a thickness in the range of 1 mm to 5 mm.

7. The lining (1) according to one of claims 1 to 6, **characterized in that** the sound insulating layer (1.2) has a raw density in the range of 0.08 to 2.0 g/cm³, preferably in the range of 0.08 to 1.4 g/cm³.

8. The lining (1) according to one of claims 1 to 7, **characterized in that** the sound insulating layer (1.2) locally has areas of different thickness, the difference in thickness being at least 1 mm.

9. The lining (1) according to one of claims 1 to 8, **characterized in that** the foam layer (1.3) has a raw density in the range of 0.02 to 0.06 g/cm³.

10. The lining (1) according to one of claims 1 to 9, **characterized in that** the total weight per area is less than 2500 g/m², preferably less than 2000 g/m².

11. A method for manufacturing a lightweight sound insulating lining (1) for a body component of a motor vehicle, in particular a lightweight front wall lining, wherein a porous sound absorbing layer (1.1) is directly back-foamed with a reactive mix containing polyol and isocyanate in a foaming mold (6, 6'), **characterized in that** as a porous sound absorbing layer (1.1) an absorber is used which has an air permeability in the range of 150 to 2000 liters/m²s at a test pressure of 100 Pa, that the reactive mix is fed into the foaming mold parallel to the backside of the sound absorbing layer (1.1) and/or parallel to the bottom surface (8.1) of a cavity of the foaming mold (6, 6'), and that a predetermined portion of the surface of the foaming mold (6, 6') is temperature-controlled in such a way and/or the mixture ratio of polyol to isocyanate is altered during feeding in such a way that a foam layer (1.3) results from the reactive mix, said foam layer has an air-tight, integral skin layer (1.2) with a thickness of at least 0.5 mm which is firmly bonded to the sound absorbing layer (1.1) without foam penetration therethrough.

12. The method according to claim 11, **characterized in that** a limited volume of the reactive mix is fed into the foaming mold (6, 6') in such a way that the reactive mix does not contact the porous sound absorbing layer (1.1) at first, wherein the integral joint between the reactive mix and the porous sound absorbing layer (1.1) occurs subsequently upon fully curing of the reactive mix.

13. The method according to claim 11 or 12, **characterized in that** back-foaming of the porous sound absorbing layer (1.1) is performed in an open foaming mold (6).

14. The method according to claim 11 or 12, **characterized in that** back-foaming of the porous sound absorbing layer (1.1) is performed in a closed foaming mold (6').

15. The method according to claim 14, **characterized in that** the reactive mix is injected into the closed foaming mold (6') using a deviating device (22), wherein the deviating device (22) forces the reactive mix into an injection flow direction (E) directed parallel to the backside of the porous sound absorbing layer (1.1).

16. The method according to one of claims 11 to 15, **characterized in that** the porous sound absorbing layer (1.1) used has a uniform density as well as a uniform flow resistance across its cross section.

17. The method according to one of claims 11 to 16, **characterized in that** the porous sound absorbing layer (1.1) has a length-specific flow resistance in the range of 5 kNs/m⁴ to 40 kNs/m⁴, preferably in the range of 5 kNs/m⁴ to 25 kNs/m⁴.

18. The method according to one of claims 11 to 17, **characterized in that** the porous sound absorbing layer (1.1) has a weight per area of 100 g/m² to 1600 g/m² and/or a thickness in the range of 2 mm to 30 mm.

19. The method according to one of claims 11 to 18, **characterized in that** the porous sound absorbing layer (1.1) used is made of polyethylene fibers, polypropylene fibers, a mixture of polyethylene and polypropylene fibers, cotton fibers or a mixture of polyethylene and natural fibers.

## Revendications

1. Revêtement léger, d'isolation acoustique (1) pour une pièce de carrosserie d'un véhicule à moteur, en particulier sous forme d'un revêtement léger de paroi avant, comprenant une couche absorbant le bruit (1.1), une couche amortissant le bruit (1.2) étanche à l'air directement reliée à la couche absorbant le bruit (1.1) et une couche de mousse consécutive (1.3), la couche absorbant le bruit (1.1) étant formée d'un absorbeur poreux, de préférence un non tissé fibreux ou une mousse, **caractérisé en ce que** l'absorbeur poreux (1.1) présente pour une pression test de 100 Pa une perméabilité d'air dans le domaine de 150 à 2.000 litres/m²s, la couche amortissant le bruit (1.2) étant formée par une couche de pellicule intégrale d'au moins 0,5 mm d'épaisseur de la couche de mousse (1.3) et étant reliée par surmoussage de l'absorbeur poreux (1.1) sans pénétration de mousse par liaison de matière à l'absorbeur poreux (1.1).

2. Revêtement (1) selon la revendication 1, **caractérisé en ce que** l'absorbeur poreux (1.1) présente une résistance à l'écoulement relative à la longueur comprise dans le domaine de 5 kNs/m⁴ à 40 kNs/m⁴, de préférence dans le domaine de 5 kNs/m⁴ à 25 kNs/m⁴

3. Revêtement (1) selon la revendication 1 ou 2, **caractérisé en ce que** l'absorbeur poreux (1.1) présente une densité homogène et/ou une résistance à l'écoulement régulière observée sur sa section transversale.

4. Revêtement (1) selon l'une des revendications 1 à 3, **caractérisé en ce que** l'absorbeur poreux (1.1) présente un grammage de 100 g/m² à 1.600 g/m² et/ou compris une épaisseur dans le domaine de 2 mm à 30 mm.

5. Revêtement (1) selon l'une des revendications 1 à 4, **caractérisé en ce que** l'absorbeur poreux (1.1) est composé d'un non tissé fibreux en fibres de polyéthylène, de polypropylène, d'un mélange de fibres de polyéthylène et de polypropylène, de fibres de coton ou un mélange de fibres polyéthylène et de fibres naturels.

6. Revêtement (1) selon l'une des revendications 1 à 5, **caractérisé en ce que** la couche amortissant le bruit (1.2) présente une épaisseur dans le domaine de 1 mm à 5 mm.

7. Revêtement (1) selon l'une des revendications 1 à 6, **caractérisé en ce que** la couche amortissant le bruit (1.2) présente une densité brute dans le domaine de 0,08 à 2,0 g/cm³, de préférence dans le domaine de 0,08 à 1,4 g/cm³.

8. Revêtement (1) selon l'une des revendications 1 à 7, **caractérisé en ce que** la couche amortissant le bruit (1.2) présente localement des zones de surfaces d'épaisseur différentes dont la différence est d'au moins un 1 mm.

9. Revêtement (1) selon l'une des revendications 1 à 8, **caractérisé en ce que** la couche de mousse (1.3) présente une densité brute dans le domaine de 0,02 à 0,06 g/cm³.

10. Revêtement (1) selon l'une des revendications 1 à 9, **caractérisé en ce que** son grammage total est inférieur à 2.500 g/m², de préférence est inférieur à 2.000 g/m².

11. Procédé pour la fabrication d'un revêtement léger, d'isolation acoustique (1) pour une pièce de carrosserie d'un véhicule à moteur, en particulier sous forme d'un revêtement léger de paroi avant, où une couche poreuse absorbant le bruit (1.1) est directement surmoulé dans un outil de moussage (6, 6') avec un mélange de réaction contenant du polyol et de l'isocyanate, **caractérisé en ce qu'**on utilise en tant que couche poreuse absorbant le bruit (1.1) un absorbeur qui présente pour une pression test de 100 Pa une perméabilité d'air dans le domaine de 150 à 2.000 litres/m²s, **en ce que** le mélange de réaction est introduit dans l'outil de moussage parallèlement à la face arrière de la couche absorbant le bruit (1.1) et/ou parallèlement à la surface de fond (8.1) d'une cavité de l'outil de moussage (6, 6'), et **en ce qu'**une zone prédéterminée partielle de surface de l'outil de moussage (6, 6') est tempérée et/ou pendant l'introduction le rapport de mélange entre le polyol et l'isocyanate est modifiée de sorte qu'il en résulte à partir du mélange de réaction une couche de mousse (1.3) qui présente une couche de pellicule intégrale (1.2) d'au moins 0,5 mm d'épaisseur qui est reliée à la liaison de matière à la couche absorbant le bruit (1.1) sans pénétration de mousse.

12. Procédé selon la revendication 11, **caractérisé en ce qu'**un volume limité du mélange de réaction est introduit à l'outil de moussage (6, 6') de sorte que le mélange de réaction ne touche pas tout d'abord la couche poreuse absorbant le bruit (1.1), la liaison de matière entre le mélange de réaction et la couche poreuse absorbant le bruit (1.1) se réalisant ensuite lors de la réaction du mélange de réaction.

13. Procédé selon la revendication 11 ou 12, **caractérisé en ce que** le surmoussage de la couche poreuse absorbant le bruit (1.1) est effectué dans un outil de moussage ouvert (6).

14. Procédé selon la revendication 11 ou 12, **caractérisé en ce que** le surmoussage de la couche poreuse absorbant le bruit (1.1) est effectué dans un outil de moussage fermé (6').

15. Procédé selon la revendication 14, **caractérisé en ce que** le mélange de réaction est injecté dans l'outil fermé (6') de moussage en utilisant un outil de déviation (22), l'outil de déviation (22) imposant au mélange de réaction une direction d'écoulement d'injection (E) orientée parallèlement à la face arrière de la couche poreuse absorbant le bruit (1.1).

16. Procédé selon l'une des revendications 11 à 15, **caractérisé en ce que** la couche poreuse absorbant le bruit (1.1) utilisée présente observée sur sa section transversale une densité homogène et/ou une résistance d'écoulement régulière.

17. Procédé selon l'une des revendications 11 à 16, **caractérisé en ce que** la couche poreuse absorbant le bruit (1.1) présente une résistance d'écoulement relative à la longueur dans le domaine de 5 kNs/m⁴ à 40 kNs/m⁴, de préférence dans le domaine de 5 kNs/m⁴ à 25 kNs/m⁴.

18. Procédé selon l'une des revendications 11 à 17, **caractérisé en ce que** la couche poreuse absorbant le bruit (1.1) utilisée présente un grammage de 100 g/m² à 1.600 g/m² et/ou une épaisseur dans le domaine de 2 mm à 30 mm.

19. Procédé selon l'une des revendications 11 à 18, **caractérisé en ce que** la couche poreuse absorbant le bruit (1.1) utilisée est composée de fibres de polyéthylène, de polypropylène, d'un mélange de fibres de polyéthylène et de polypropylène, de fibres de coton ou d'un mélange de fibres naturelles et de polyéthylène.
